# EUROPEAN PATENT SPECIFICATION

(11) **EP 3 515 222 B1**
(45) Date of publication and mention of the grant of the patent: **19.05.2021**
(21) Application number: 17767795.2
(22) Date of filing: 11.09.2017
(51) Int. Cl.: A41D 19/015

(54) **GLOVE FOR VIBRATION INSULATION**
HANDSCHUH ZUR SCHWINGUNGSISOLATION
GANT D'ISOLATION CONTRE LES VIBRATIONS

(30) Priority: 20.09.2016 EP 16189762; 05.04.2017 EP 17164981
(43) Date of publication of application: 31.07.2019
(73) Proprietor: Y. Berger & Co. AB, 421 30 Västra Frölunda (SE)
(72) Inventor: BERGER, Markus, 421 30 Västra Frölunda (SE)
(74) Representative: AWA Sweden AB
(86) International application number: PCT/EP2017/072753
(87) International publication number: WO 2018/054708

(56) References cited:
- FR-A- 1 131 756
- SE-C2- 500 066
- US-A1- 2004 226 074
- US-A1- 2006 206 977
- US-A1- 2015 181 955

## Description

### Technical field of the Invention

The present invention relates to a glove and a covering for vibration insulation.

### Background and Summary of the Invention

The use of vibrating instruments and/or tools may harm different parts of the hand and/or the arm. These kinds of vibration related injuries can affect e.g. blood vessels, nerves, muscles, boons and/or joints, and may be referred to as hand-arm vibration syndrome. As compared with rest of the hand, the fingers are more exposed at somewhat higher frequencies compared to the ISO 5349-1, such as frequencies between 25-500 Hz. Injuries related to the fingers may also be known as the white finger syndrome, for example: tingling 'whiteness' or numbness in the fingers (blood vessels and nerves affected), fingers change color (blood vessels affected), loss of manual dexterity (nerves and muscles affected).

Individuals working with these kinds of instruments and/or tools therefore wear protection gear, such as gloves with an insulating material in order to protect their hands from the vibrations.

US Patent Application US 2006/0206977 discloses an impact and/or vibration absorbent material that can be used in a variety of protective equipment and apparel, particularly gloves. The impact absorbent material has at least two material layers, each material layer preferably containing a number of holes.

A problem with the current state of the art is that despite the use of protective wear, the hand and fingers are still hurt. There is therefore a need to improve the current state of the art relating to gloves for vibration insulation.

It is an object of the present invention to improve the current state of the art and to mitigate at least some of the above mentioned problems. These and other objects are achieved by a glove for vibration insulation as defined by the independent claim.

According to a first aspect of the invention a glove for vibration insulation is provided. The glove for vibration insulation comprises a gripping side and a hand-back side, each side comprises an inner surface and an outer surface;
wherein said gripping side comprises a palm covering portion and at least one finger covering portion; and
wherein said finger covering portion comprises a first material with a density of at least 1.5 g/cm³ and an insulation material; and
wherein said insulation material is arranged in front of said first material as seen from the outer surface of said gripping side; and
wherein said first material and said insulation material cover at least 20% of the length of said finger covering portion.

The present invention is based on the realization that by providing a glove with a first material comprising e.g. a high density and/or weight. Vibration related injuries may cause by the natural frequency of the fingers being too high. By adding an extra weight to the glove the total weight of the system comprising the hand (including the fingers) and the glove is increased. Further, the natural frequency of the hand and/or the fingers is decreased by increasing the total weight of the system.

It shall be understood that the term glove is used in accordance with the definition found in Macmillan dictionary, i.e. a piece of clothing intended to cover the fingers and the hand. This includes what may be referred to as a mitten (i.e. a type of glove with one part for your thumb and another part for your fingers).

According to a second aspect not within the scope of the invention, a covering for vibration insulation is provided. The covering for vibration insulation comprises a gripping side and a hand-back side, each side comprises an inner surface and an outer surface;
wherein said gripping side comprises a palm covering portion and at least one finger covering portion; and
wherein said finger covering portion comprises a first material with a density of at least 1.5 g/cm³ and an insulation material; and
wherein said insulation material is arranged in front of said first material as seen from the outer surface of said gripping surface; and
wherein said first material and said insulation material covers at least 20 % of the length of said finger covering portion or wherein the weight of said first material is at least 5 g.

According to a third aspect, a glove for vibration insulation is provided. The glove for vibration insulation comprises a gripping side and a hand-back side, each side comprises an inner surface and an outer surface;
wherein said gripping side comprises a palm covering portion and at least one finger covering portion; and
wherein said finger covering portion comprises a first material with a density of at least 1.5 g/cm³ and an insulation material; and
wherein said insulation material is arranged in front of said first material as seen from the outer surface of said gripping side; and
wherein the weight of said first material is at least 5 g.

Effects and features of the first,second, and third aspects of the present invention are largely analogous. Embodiments and definations mentioned below are largely compatible with both the first,second, and third aspect of the invention.

In relation to this invention a covering for vibration insulation shall be understood as any piece used for protecting the hands and/or fingers against injuries which may occur while using vibrating instruments, e.g. drills, circular-, chain- or other saws, brush cutters, tampering machines, sanders, grinders, impact wrenches, pneumatic hammers, rivet guns, valves steerings wheels or operator handles.

It shall also be understood that in relation to this invention the insulation material is used for full or partial vibration insulation of the palm and/or fingers.

According to at least one example embodiment of the invention the hand-back side of the glove is the side of the glove covering the hand-back and the side of the fingers which corresponds to the hand-back. According to at least another example embodiment of the invention the gripping side is the side which covers the palm and the side of the fingers which corresponds to the palm.

According to at least one example embodiment of the invention it shall be understood that the inner surface of the gripping side is the surface facing palm and fingers and the outer surface of the gripping side is the opposite surface of said inner surface. Hence, the outer surface may be the surface facing the surrounding and/or the material to be gripped. Additionally, the inner surface of the hand-back side of the glove is the surface facing the hand-back and the fingers, whereas the outer surface of the hand-back side is the opposite surface of the inner surface. Hence the outer surface of the hand-back side is facing the surrounding.

According to at least one example embodiment of the invention the length of the finger covering portion corresponds to the length from the border or fold between the palm covering portion and the finger covering portion to the end of the finger covering portion.

According to at least one example embodiment of the invention the first material and the insulation material may additionally or alternatively be arranged on the hand-back side of the glove.

According to at least one example embodiment of the invention the first material may additionally or alternatively be arranged in just one spot, as a point-weight, on the gripping side of the finger covering portion on one or more or all of the glove fingers. The point-weight may additionally, or alternatively be formed as one or more rings which may be arranged at or around one, two, three or all of the glove fingers during use of the glove described herein. According to one example, the one or more rings or a majority of the rings are arranged on the top half of the glove finger; alternatively, the one or more rings or a majority of the rings are arranged on the bottom half of the glove finger

Additionally or alternatively, the weight may for example be formed as a plate or a rod, optionally straight, curved and/or arc shaped, and optionally having the same or similar extension as the finger. According to one example this weight extends at least along 30 % or at least along 50 % or at least along 70 % or at least along 80 % of the length of the glove finger as measured in a direction from the palm towards the finger top. Additionally or alternatively, this weight extend at least along at least along 30 % or at least along 50 % or at least along 70 % or at least along 80 % of the width of the glove finger (on the gripping side of the glove in a direction transverse to the direction from the palm towards the finger top).

According to at least one example embodiment of the invention the first material and the insulation material may be provided as one unitary layer, wherein the density of that layer varies within the layer. The density may e.g. vary a gradually and/or step wise. The density closest to the hand may be higher than the density of the layer closest to the outer surface. For example, the layer may comprise of a polymer material, e.g. provided as a foam, and heavy beads of e.g. a metal or a composite material. The heavy beads are provided on one side of said layer, i.e. the foam and the heavy beads together constitutes the first material, which side is arranged on the inner surface of the gripping side of the glove. Hence, the foam at the outer surface of the gripping side be free from or substantially free from heavy beads and thereby act as an insulation material. According to at least one example of the invention, the layer or parts of the layer may have a density of at least 1.5 g/cm³.

According to at least one example embodiment of the invention said glove is a three finger glove, wherein said gripping side comprises three finger covering portions which are separated from each other, and
wherein one, two or three of the finger covering portions each comprises a first material with a density of at least 1.5 g/cm³ and an insulation material; and
wherein said insulation material is arranged in front of said first material as seen from the outer surface of said gripping side; and
wherein said first material and said insulation material cover at least 20 % of the length of said one, two or three finger covering portion or wherein the weight of said first material is at least 5 g.

According to at least one example embodiment of the invention there is a first finger covering portion for the thumb, a second finger covering portion for the index finger and a third finger covering portion for the other three fingers. By separating the index finger from the rest of the fingers a stronger and easier grip may be achieved. According to at least another example embodiment of the invention there is a first finger covering portion for the thumb, a second finger covering portion for the index and middle finger and a third finger covering portion for the ring and little finger.

According to an example embodiment of the invention said first material has a density of at least 1,5 g/cm³, or at least 2 g/cm³, or at least 3 g/cm³, or at least 5 g/cm³, or at least 5.5 g/cm³, or at least 7 g/cm³, or at least 8 g/cm³, or at least 10 g/cm³.

Additionally, or alternatively the first material has a density of no more than 50 g/cm³, or no more than 30 g/cm³, or no more than 25 g/cm³, or no more than 20 g/cm³, or no more than 15 g/cm³.

According to at least one example embodiment of the invention the first material has a density between 1.5 g/cm³ and 50 g/cm³. A higher density of the first material may provide possibilities for a smaller amount of first material needed in the glove, i.e. smaller pieces of the first material may be used in order to provide the desired weight of the glove.

According to at least one example embodiment of the invention the weight of said first material is at least 5 g, or at least 7 g, or at least 10 g, or at least 15 g, or at least 20 g, or at least 30 g, or at least 50 g.

Additionally, or alternatively the weight of said first material is no more than 300 g, or no more than 250 g, or no more than 200 g, or no more than 150 g, or no more than 100g.

According to at least one example embodiment of the invention the weight of the first material is between 5 g and 300 g. This weight of the first material gives the finger protection since the natural frequency of the fingers is altered.

According to at least one example embodiment of the invention said first material and/or said insulation material comprises a fold to facilitate a bending of the material.

According to at least one example embodiment of the invention the fold is a preformed and/or predefined fold which corresponds to at least one of the finger joints, e.g. the distal interphalangeal joints, the proximal interphalangeal joints and the metacarpophalangeal joints when the glove is in use. This is in order to facilitate bending of the fingers.

According to at least one example embodiment of the invention the fold is formed by a thinning of the first material and/or of the insulation material. This means that the pressure acting on the hand at the finger joints is reduced and/or eliminated. At the joints the nerve system of the hand lies closer to the surface, by avoiding or reducing the contact between the joints and the inner surface may result in less pressure at these nerves. The thinning may be achieved by full and/or partial cutouts. A full cutout may be a hole which goes through the first material and/or the second material.

According to at least one example embodiment of the invention the insulation material may comprise through holes. At the fold the holes are larger than in the rest of the insulation material, which will provided the insulation material with a larger flexibility at the fold.

According to at least one example embodiment of the invention the first material and said insulation material covers at least 30 %, or at least 50 %, or at least 75 %, or at least 90 % of the width of the gripping side of said at least one finger covering portions. Preferably, the first material and the insulation material shall cover so much so that the finger and/or palm will not come in contact with the vibrating instrument and/or tool with only the first and/or the insulation material in between. The width of the finger covering portion and the hand covering portion is equal to half the circumference of the finger cover portion and the palm covering portion respectively; it is understood that when the circumference is to be determined, the full circumference is measured and the measure includes both the partial circumference at the gripping side as well as the partial circumference at the hand-back side. The circumference is measured along the outer surface of the glove.

According to at least one example embodiment of the invention the first material and the insulation material covers between 50 % and 100 % of the width of the gripping side of at least one finger covering portion, or between 75 % and 100 % of the width of the gripping side of at least one finger covering portion, or between 90 % and 100 % of the width of the gripping side of at least one finger covering portion.

According to at least one example embodiment of the invention said first material and/or said insulation material further covers at least 20 % of the length of said palm covering portion.

Additionally, or alternatively the first material and/or the insulation material covers between 10 % and 95 % of the surface area of the palm covering portion. Alternatively, the first material and/or the insulation material cover between 20 % and 80 % of the surface area of the palm covering portion. Alternatively, the first material and/or the insulation material cover between 30% and 65 % of the surface area of the palm covering portion.

According to at least one example embodiment of the invention the first material is no first material arranged at the palm covering portion, i.e. there is no first material arranged at the palm covering portion which comprises a weight of at least 5 g and/or a density of at least 1,5 g/cm³ or which covers at least 20 % of the length the palm covering portion. In other words, the palm covering portion is solely covered by the insulation material. The palm does not need the extra weight which is realized by the first material. The vibration insulation achieved by the insulation material may be enough for protecting the palm for vibration related injuries.

According to at least example embodiment of the invention the shape of the largest surface of said first material matches to the shape of the largest surface the insulation material.

According to at least one example embodiment of the invention the surface area of the largest surface of the first material and the surface area of the largest surface of the insulation material is essentially equal. According to at least one example, when the first material and the insulation material is being aligned in the center the length and width of the largest surface of the first material and the insulation material do not differ more than 5 % from each other, or no more than 3 % from each other, or no more than 2 % from each other.

According to at least one example embodiment of the invention said first material has a thickness of at least 0,25 mm and/or no more than 10 mm; and
wherein said insulation material has a thickness of at least 1,5 mm and/or no more than 25 mm.

According to at least one example embodiment of the invention the thickness of the first material is at least 0,25 mm, or at least 0,5 mm or at least 1 mm, or at least 2 mm, or at least 3 mm.

Additionally, or alternatively the thickness of the first material is no more than 10 mm, or no more than 7 mm, or no more than 5 mm.

According to at least one example embodiment of the invention the thickness of the first material is between 0,25 mm to 10 mm.

According to at least one example embodiment of the invention the thickness of the insulation material is at least 1,5 mm, or at least 2 mm, or at least 2,5 mm, or at least 3 mm or at least 5 mm, or at least 10 mm.

Additionally, or alternatively the thickness of the insulation material is no more than 25 mm, or no more than 20 mm, or no more than 15 mm.

According to at least one example embodiment of the invention the thickness of the first material is between 1,5 mm to 25 mm.

According to an example embodiment of the invention said finger covering portion and/or said palm covering portion further comprises an inner and an outer surface layer wherein said first material and/or said insulation material are arranged between said inner and outer surface layers. The inner surface layer is arranged closest to the hand and the outer surface layer is arranged most far away from the hand. In such an embodiment, the outer surface layer may be the layer which in use is contacting the vibrating instrument.

According to at least one example embodiment of the invention the first material and/or the insulation material may form one or several pads between the inner and outer surface layers. The one or several pads may be arranged to partially or fully cover the gripping side of the glove. According to at least one example embodiment of the invention the pads are arranged to cover the gripping side except for the parts of the gripping side at the fingerfolds, i.e. where the glove finger folds when the glove is in use.

According to at least one example embodiment of the invention the pads may comprise both the first material and the second material, or additionally or alternatively the may comprise solely the insulation material.

According to at least one example embodiment of the invention the insulation material comprises a gel material, or a foam material, or a foam rubber material, or a material comprising gas-filled cavities.

According to at least one example embodiment of the invention the insulation material may be a gel material such Ansell Vibraguard, or a foam material, or a foam rubber material such that Eureka Impact Vibration, or a material comprising gas-filled compartments such that Impacto AV Air gloves.

According to an example embodiment of the invention said first material comprises a polymer based compound.

A polymer based compound may be flexible which facilitates a folding of the first material when gripping a material and/or an instrument. Moreover, a polymer compound provides a light-weight product.

According to at least one example embodiment of the invention the polymer based compound is a thermoplastic rubber. According to at least another example embodiment of the invention the polymer based compound may be a rubber made from polyvinylchloride, i.e. PVC rubber.

According to at least one example embodiment of the invention said first material comprises a heavy liquid with a density higher than 2 g/cm³ or higher than 3 g/cm³ or higher than 5.5 g/cm³. For example, the heavy liquid may be mercury, a halogenated hydrocarbon e.g. tetrabromo ethane, or solutions of salts of various metals such as potassium tetraiodomercurate(II).

According to at least one example embodiment of the invention the first material may comprise a heavy filler with a density higher than 3 g/cm³ or higher than 5.5 g/cm³. The filler may for example be iron oxides.

According to at least one example embodiment of the invention the first material may be a composite comprising a polymer material and the filler described above. In such cases, the composite material or parts of the composite material has a density higher than 2 g/cm³.

According to an example embodiment of the invention said first material is a composite comprising metal particles and/or metal beads. The metal particles and/or the metal beads increases the density of the first material.

According to at least one example embodiment of the invention the composite may be a mixture of a polymer based compound and metal particles and/or metal beads. The polymer based compound may for example be PVC rubber.

It shall be understood that the metal particles may be in the form of a powder.

According to at least one example embodiment the metal particles and/or the metal beads may be out of lead and/or tungsten. Lead and tungsten has a high density which lowers the required amount or volume of metal particles and/or metal beads which has to be used in order to achieve the desired density of the first material. This is advantageous as it facilitates the forming and/or durability of the composite.

According to at least one example embodiment of the invention the first material in the finished product comprises no more than 65 vol% of metal particles and/or metal beads, or no more than 50 vol% of metal particles and/or metal beads, or no more than 45 vol% of metal particles and/or metal beads, or no more than 30 vol% of metal particles and/or metal beads, or no more than 25 vol% of metal particles and/or metal beads, or no more than 20 vol% of metal particles and/or metal beads or no more than 15 vol% of metal particles and/or metal beads.

According to at least one example embodiment of the invention the first material in the finished product comprises at least 1 vol% of metal particles and/or metal beads, or at least 3 vol% of metal particles and/or metal beads, or at least 5 vol% of metal particles and/or metal beads, or at least 7 vol% of metal particles and/or metal beads, or at least 10 vol% of metal particles and/or metal beads, or at least 15 vol% of metal particles and/or metal beads or at least 20 vol% of metal particles and/or metal beads.

According to at least one example embodiment of the invention the first material in the finished product comprises between 1 vol%-65 vol% of metal particles and/or metal beads.

According to at least one example embodiment of the invention the metal particles and/or metal beads is made of tungsten since it is less toxic and harmful for the environment than lead.

According to an example embodiment of the invention said first material comprises protrusions, wherein said protrusions cover at least 1/10, or at least 1/3, or at least 1/2, or at least 2/3 of the area of the first material, and wherein said protrusions optionally has a height of at least 0,25 and no more than 10 mm.

According to at least one example embodiment of the invention the each protrusion has a surface area of at least 1 mm², at least 2 mm², or at least 5 mm², or at least 7 mm². Additionally, or alternatively the surface area is no more than 15 mm², or no more than 10 mm². According to at least one example embodiment of the invention the surface area of each protrusion is between 2 mm² and 15 mm².

According to at least one example embodiment of the invention the height of the protrusion is at least 0,25 mm, or at least 0,5 mm, or at least 1 mm, or at least 3 mm, or at least 5 mm, or at least 7 mm.

According to at least one example embodiment of the invention the height of the protrusion lower than 10 mm, or lower than 7 mm, or lower than 5 mm, or lower than 3 mm.

According to at least one example embodiment of the invention the height of the protrusion is between 0,25 mm and 10 mm.

According to an example embodiment of the invention said protrusions are facing said insulation material.

According to at least one example embodiment the protrusions are used for regulating the E-module, i.e. the softness, of the insulation material. The E-module decreases exponansionally with an increased pressure. By engaging the insulation material with the protrusions the insulation material with adapt the desired softness. When increasing the pressure the insulation material will be forced bewteen the protrusions.

According to at least one example embodiment of the invention the height of the protrusions is less than the thickness of the insulation material. If the height of the protrusion were larger than the thickness of the insulation material the insulation material may be completely compressed depending on the softness of the insulation material. A completely compressed insulation material will neither protect as desired nor would the glove be comfortable for the user. According to at least one example embodiment of the invention the insulation material is softer than the first material. In other words the E-module of the insulation material is smaller than the E-module of the first material.

According to one example embodiment of the invention the protrusions together with the through holes in the insulation material increases the instability in the shear direction. The vibrations from the instrument are transported in three directions in the glove. By increasing the instability between the first material and the insulation material the glove protects the fingers from injuries caused by the vibration transported in the shear direction.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 shows a schematic view of a glove for vibration insulation in accordance with at least one example embodiment of the invention;
Fig. 2 shows a schematic view of a glove for vibration insulation in accordance with at least one example embodiment of the invention;
Fig. 3 shows a schematic view of a glove for vibration insulation in accordance with at least one example embodiment of the invention;
Fig. 4 shows a cross-sectional view of the gripping side of a glove for vibration insulation in accordance with at least one embodiment of the invention;
Fig. 5 shows a photograph of the first material in accordance with at least one example embodiment of the invention;
Fig. 6 shows a photograph of the insulation material in accordance with at least one example embodiment of the invention;
Fig. 7 shows a graph of how the E-module depends on pressure in accordance with at least one embodiment of the invention;
Fig. 8 shows a graph of the resonance dependency of frequency in accordance with at least one embodiment of the invention;
Fig. 9 shows a photograph of a glove for vibration insulation in accordance with at least one embodiment of the invention.

### Detailed description of the drawings

In the present detailed description, embodiments of the present invention will be discussed with the accompanying figures. It should be noted that this by no means limits the scope of the invention, which is also applicable in other circumstances for instance with other types or variants of gloves for vibration insulation than the embodiments shown in the appended drawings. Further, that specific features are mentioned in connection to an embodiment of the invention does not mean that those components cannot be used to an advantage together with other embodiments of the invention.

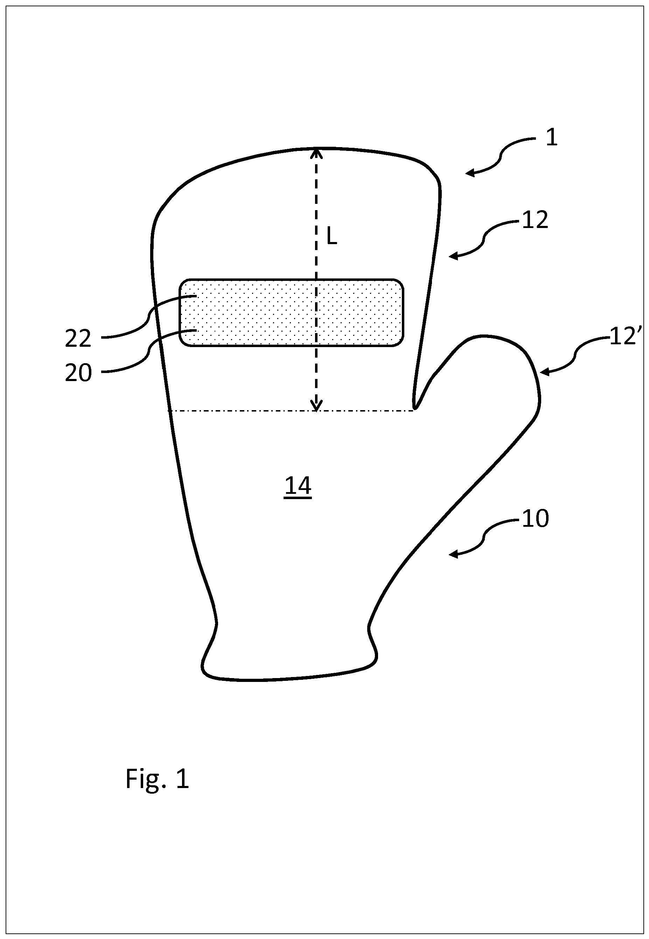

Fig. 1 shows a glove for vibration insulation 1 which comprises a gripping side 14 and a hand-back side, each side comprises an inner surface and an outer surface. The gripping side 14 comprises a palm covering portion 10 and at least one finger covering portion 12, 12'. In Fig. 1 the glove for vibration insulation 1 comprises two finger covering portions 12, 12'. The finger covering portion 12 comprises a first material 22 with a density of at least 1.5 g/cm³ and an insulation material 20. The shape of the largest surface of the first material 22 matches to the shape of the largest surface the insulation material 20.

The insulation material 20 is arranged in front of said first material 22 as seen from the outer surface of said gripping side 14. In other words, the first material 22 is placed behind the insulation material 20 in the glove for vibration insulation 1 shown in fig. 1. The first material 22 and the insulation material 20 cover at least 20 % of the length L of at least one of the finger covering portions 12. In this embodiment, the first material 22 and the insulation material 20 covers 24 % of the length L of one finger covering portion 12. Alternatively the weight of the first material is at least 5 g. Optionally, the first material 22 and the insulation material 20 is arranged to cover at least 50 % of the width of the gripping side of said at least one finger covering portions.

The glove for vibration insulation 1 comprises any glove and/or mitten. This glove and/or mitten may be of a thin material or alternatively it may be of a thick material. On this glove and/or mitten the first material 22 and the insulation material 20 is arranged as a pad at the finger covering portion 12. The weight of the first material is 30 g.

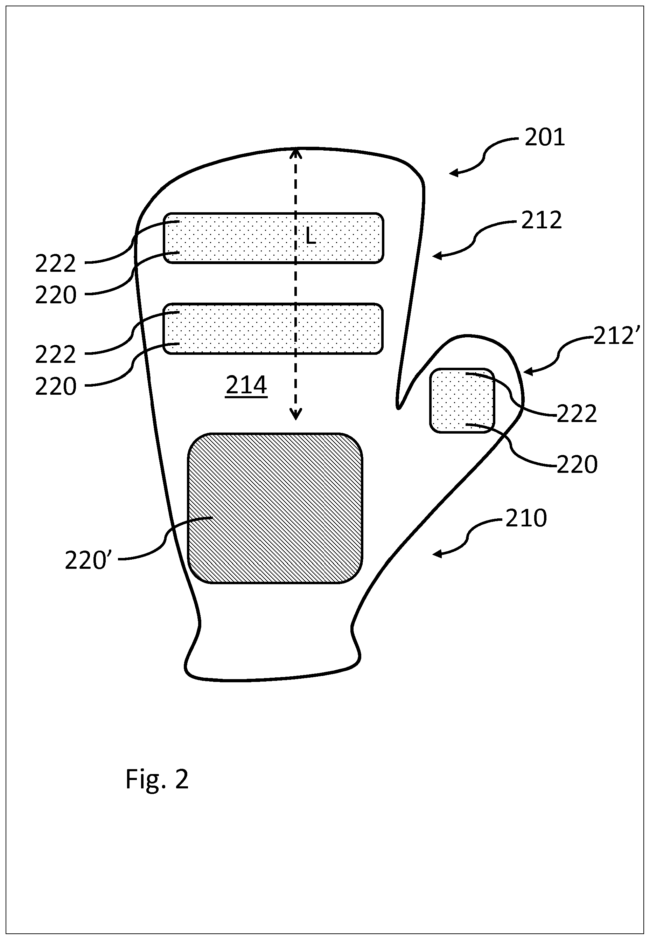

Fig. 2 shows a glove for vibration insulation 201. As the glove for vibration insulation 201 of Fig. 2 is in large the same as the glove for vibration insulation 1 of Fig. 1 (e.g. the same reference numerals as in Fig. 1, with the addition of the value "200" is used for corresponding features in Fig. 2), focus on the description related to Fig. 2 will be on the differences compared to the glove for vibration insulation 1 of Fig. 1.

In Fig. 2 the first material 222 and the insulation material 220 is arranged as two stripes on one of the two finger covering portions 212. At the other finger covering portions 212' there is solely one piece of first material 222 and insulation material 220.

In the embodiment shown in Fig. 2 the palm covering portion 210 comprises insulation material 220' suitable for reducing vibrations in the palm. This may be the same insulation material as comprised in the finger covering portions 212 and 212' or in may be another material.

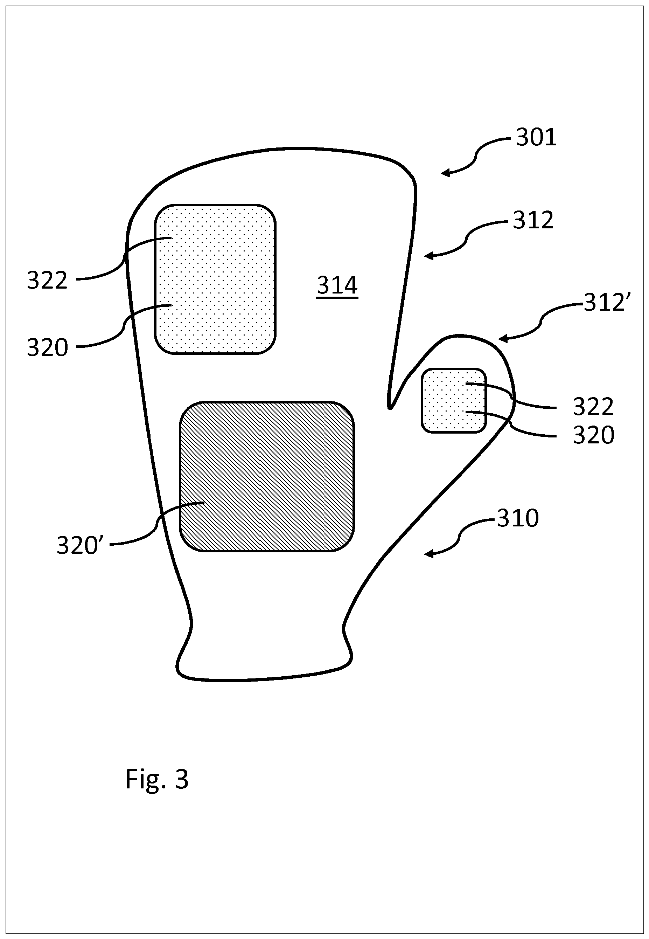

Fig. 3 shows a glove for vibration insulation 301. As the glove for vibration insulation 301 of Fig. 3 is in large the same as the glove for vibration insulation 1 of Fig. 1 (e.g. the same reference numerals as in Fig. 1, with the addition of the value "300" is used for corresponding features in Fig. 3), focus on the description related to Fig. 3 will be on the differences compared to the glove for vibration insulation 1 of Fig. 1. In Fig. 3 the first material 322 and the insulation material 320 is arranged to cover the little finger and the ring finger when the glove for vibration insulation 301 is in use. Still, the first material 322 and the insulation material cover at least 50 % of the width of the finger covering portion 312 at the gripping side 314 of the glove for vibration insulation 301. At the other finger covering portions 312' there is solely one piece of first material 322 and insulation material 320.

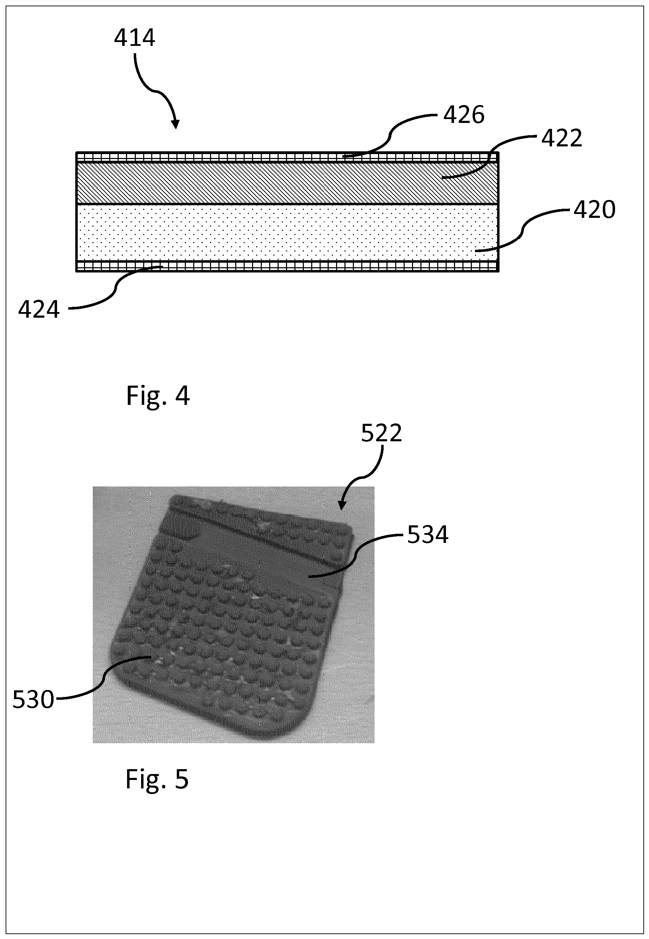

Fig. 4 shows a cross-sectional view of the gripping side 414 of a glove for vibration insulation. The gripping side comprises an inner 426 and an outer surface layer 424, a first material 422 and an insulation material 420. The first material 422 and the insulation material 420 are arranged between said inner 426 and outer surface layers 424. The first material 422 is arranged adjacent to the inner surface layer 426 whereas the insulation material 420 is arranged adjacent to the outer surface layer 424. When in use, the insulation material 420 is arranged in front of said first material 422 as seen from the outer surface of the gripping surface 414. In other words, the first material 422 is placed behind the insulation material 420.

Fig. 5 shows one example of the first material 522. The first material 522 is a composite which comprises a polymer based compound and metal particles and/or metal beads. The metal particles and/or metal beads is made from tungsten. Further, the first material 522 comprises protrusions 530. The protrusions 530 have a height of 1 mm. A portion 534 of the first material 522 is not covered by the protrusions 530, this portion forms a fold 534 in the first material 522. The first material is thinned at the fold 534 as compared with the rest of the first material 522.

The protrusions 530 cover at least 1/10 of the area of the first material 522. Further, the protrusions 530 of the first material 522 is arranged to face the insulation material when in use. The fold 534 is arranged to cover the joints of the finger when in use in order to e.g. facilitate the bending the fingers.

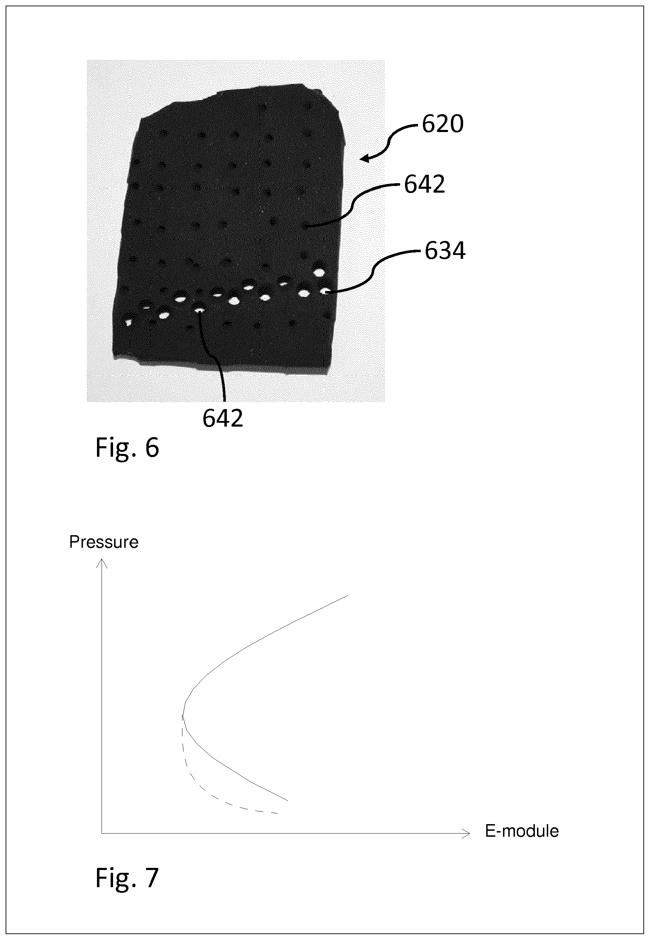

Fig. 6 shows one example of the insulation material 620. The insulation material 620 is a foam rubber material. Further, the insulation material 620 comprises holes 642. In this embodiment there are holes 642 of two different sizes, both sizes of holes being through holes. The portion of the insulation material 620 comprising the larger holes 642 corresponds to the fold 634 of the insulation material 620. The fold 634 is arranged to cover the joints of the fingers when in use in order to e.g. facilitate the bending of the fingers.

Fig. 7 shows the relationship between the E-module for the insulation material in the glove for vibration insulation and pressure applied to the glove. When the pressure starts to increase the E-module will decrease at first and then later increase again. This means that when a pressure is applied to the insulation material the softness of the material will increase. The protrusions of the first material facing the insulation material will engage the insulation material, i.e. the pressure applied to the insulation material will be different depending on if the insulation material meets a protrusion or a void. By this engagement, the softness of the insulation material may be controlled. The solid line shows the E-module of solely an insulation material. The dashed line shows the E-module of an insulation material when in contact with a first material which comprises protrusions. The E-module of the insulation material when in contact with the first material will approach the E-module of solely the insulation material when the insulation material reaches the surface in between the protrusions of the first material.

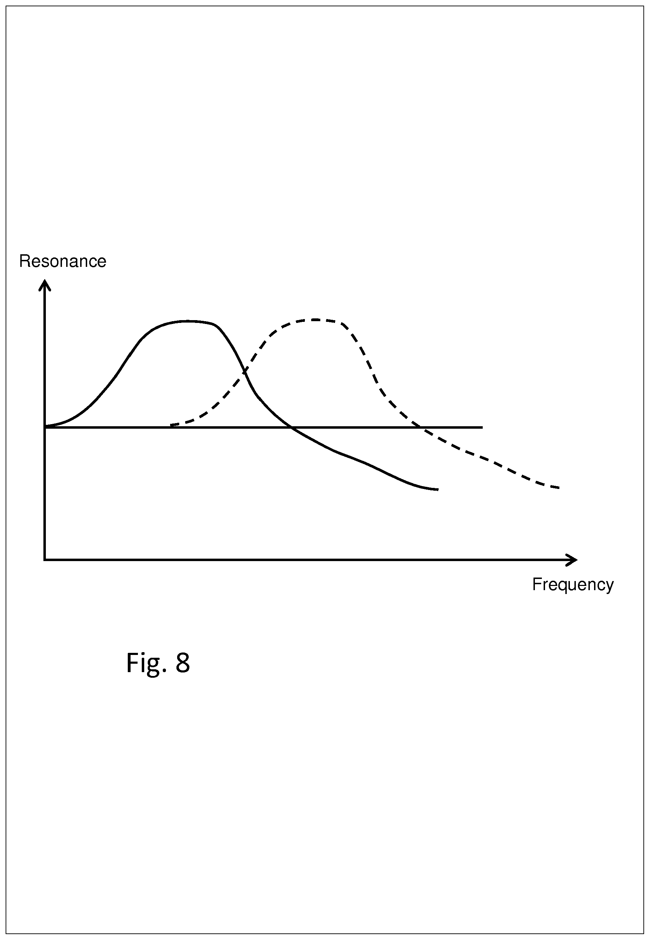

Fig. 8 shows the relationship between the resonance of the fingers and the frequency of the vibration instrument and/or tool. The solid line corresponds to the use of a glove for vibration insulations in accordance to at least one embodiment of the invention. The dashed line corresponds to the use of a glove without the first material resulting in a much lighter glove. In the graph it can be seen that when using a glove according to at least one embodiment of the invention the resonance is lowered already at lower frequencies. Hence, the glove according to at least one example embodiment of the invention protects the fingers at lower frequencies, which frequencies otherwise would have been harmful for the fingers but not necessary for other parts of the hand.

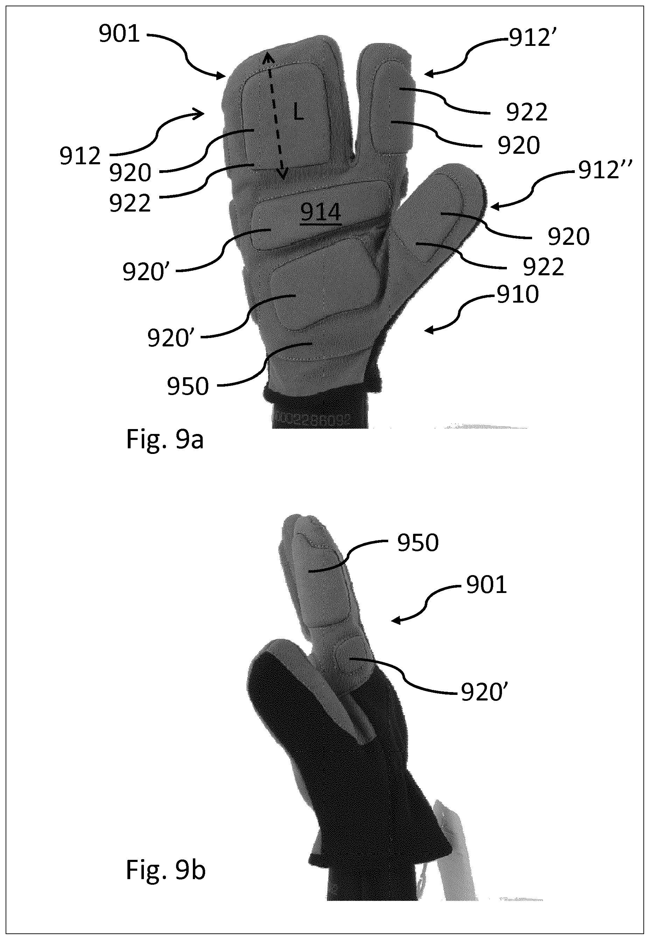

Fig. 9a-d shows photographs of a glove for vibration insulation 901. In this embodiment the glove 901 is a three finger glove, i.e. the glove 901 comprises three finger covering portions 912,912',912" which are separated from each other. These three of the finger covering portions 912, 912',912" each comprises a first material 922 with a density of at least 1.5 g/cm³ and an insulation material 920.

The insulation material 920 is arranged in front of said first material as seen from the outer surface of said gripping surface 914. In other words, the first material is placed behind the insulation material 920 in the glove for vibration insulation 901 shown in fig. 9a-d.

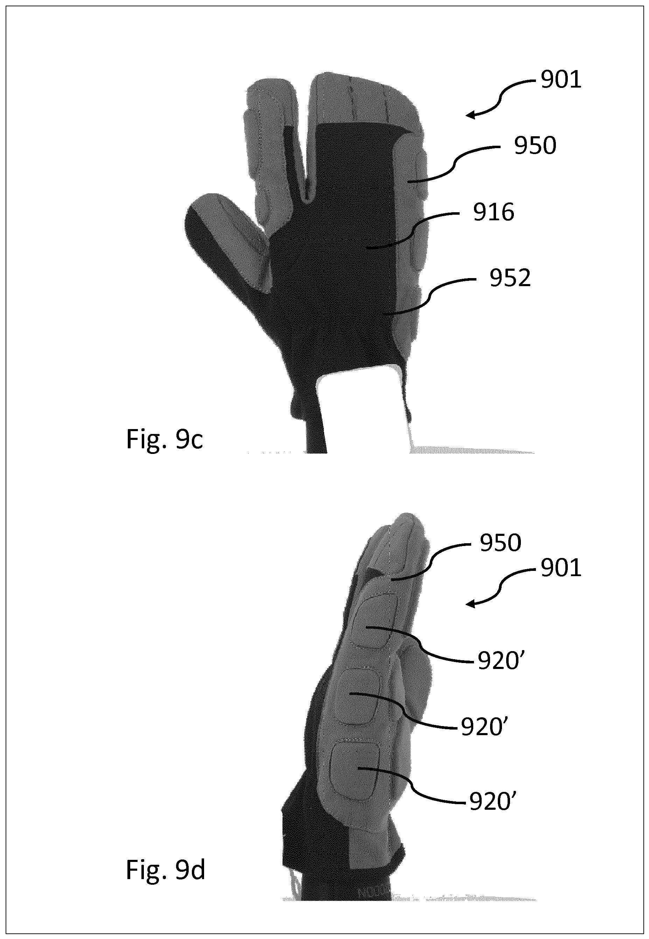

In the embodiment shown in Fig. 9 the palm covering portion 910 comprises insulation material 920'. This may be the same choice of material as comprised in the finger covering portions 912 and 912' or in may be another material.

In the embodiment shown in Fig. 9a-d the gripping side 914 comprises two layers of a non-woven material 950. At the finger covering portions 912, 912', 912" the first material 922 and the insulation material 920 is arranged between those two layers of a non-woven material 950. At the palm covering portion 910 the insulation material 920' is arranged between said two layers. As seen in Fig. 9c, the hand-back side 916 of the glove for vibration insulation 901 partially comprises two layers of a non-woven material 950 and partially a woven and elastic material 952.

Fig. 9b and 9d shows the glove for vibration insulation from the sides. Here it can be seen that between the two layers of a non-woven material 950 of the hand-back side 916 there is pads comprising insulation material 920'.

The skilled person realizes that a number of modifications of the embodiments described herein are possible without departing from the scope of the invention, which is defined in the appended claims. For instance the glove may be a five finger glove where all five fingers being separated from each other when in use. Moreover, the first material and the insulation material may be arranged differently than what is shown in the embodiments described above in order to protect the fingers in a different way. Different vibrating instruments require protection in different ways. For example, some vibrating instruments are hold as a pen, i.e. with a pen grip. This requires protection for the thumb, index finger and the side of the long finger.

## Claims

1. A glove for vibration insulation (1) comprising a gripping side (14) and a hand-back side, each side comprises an inner surface and an outer surface;
wherein said gripping side comprises a palm covering portion (10) and at least one finger covering portion (12); and
wherein said finger covering portion (12) comprises a first material (22) and an insulation material (20); and
wherein said insulation material (20) is arranged in front of said first material (22) as seen from the outer surface of said gripping side (14); and
wherein said first material (22) and said insulation material (20) cover at least 20 % of the length (L) of said finger covering portion (12)
**characterized in that**
the first material (22) has a density of at least 1.5 g/cm³.

2. The glove for vibration insulation according to claim 1 wherein said glove is a three finger glove, wherein said gripping side comprises three finger covering portions (912, 912', 912") which are separated from each other, and
wherein one, two or three of the finger covering portions each comprises a first material with a density of at least 1.5 g/cm³ and an insulation material; and
wherein said insulation material is arranged in front of said first material as seen from the outer surface of said gripping side; and
wherein said first material and said insulation material cover at least 20 % of the length of said one, two or three finger covering portion.

3. The glove according to any of the preceding claims wherein said first material and/or said insulation material comprises a fold to facilitate a bending of the material.

4. The glove for vibration insulation according to any of the preceding claims wherein the first material and said insulation material covers at least 50 %, or at least 75 %, or at least 90 % of the width of the gripping side of said at least one finger covering portions.

5. The glove according to any of the preceding claims wherein said first material and/or said insulation material further covers at least 20 % of the length of said palm covering portion.

6. The glove for vibration insulation according to any of the preceding claims wherein the shape of the largest surface of said first material matches to the shape of the largest surface the insulation material.

7. The glove for vibration insulation according to any of preceding claims wherein said finger covering portion and/or said palm covering portion further comprises an inner (426) and an outer surface layer (424) wherein said first material and/or said insulation material are arranged between said inner and outer surface layers.

8. The glove for vibration insulation according to any of the preceding claims wherein the insulation material comprises a gel material, or a foam, or a foam rubber material, or a material comprising gas-filled cavities.

9. The glove for vibration insulation according to any of the preceding claims wherein said first material comprises a polymer based compound.

10. The glove for vibration insulation according to any of the preceding claims wherein said first material is a composite comprising metal particles and/or metal beads.

11. The glove for vibration insulation according to any of the preceding claims wherein said first material comprises protrusions (530), wherein said protrusions cover at least 1/10, or at least 1/3, or at least 1/2, or at least 2/3 of the area of the first material, and wherein said protrusions has a height of at least 0,25-10 mm.

12. The glove for vibration insulation according to claim 11 wherein said protrusions are facing said insulation material.

13. A glove for vibration insulation (1) comprising a gripping side (14) and a hand-back side, each side comprises an inner surface and an outer surface;
wherein said gripping side comprises a palm covering portion (10) and at least one finger covering portion (12); and
wherein said finger covering portion (12) comprises a first material (22) and an insulation material (20); and
wherein said insulation material (20) is arranged in front of said first material (22) as seen from the outer surface of said gripping side (14);
**characterized in that**
the first material (22) has a density of at least 1.5 g/cm³, and **in that** the weight of said first material (22) is at least 5g.

## Patentansprüche

1. Handschuh zur Schwingungsisolierung (1) mit einer Greifseite (14) und einer Handrückseite, wobei jede Seite eine Innenfläche und eine Außenfläche umfasst;
wobei die Greifseite einen Handflächenabdeckungsabschnitt (10) und mindestens einen Fingerabdeckungsabschnitt (12) umfasst; und
wobei der Fingerabdeckungsabschnitt (12) ein erstes Material (22) mit und ein Isolationsmaterial (20) umfasst; und
wobei das Isolationsmaterial (20) von der Außenfläche der Greiferseite (14) aus gesehen vor dem ersten Material (22) angeordnet ist; und
wobei das erste Material (22) und das Isolationsmaterial (20) mindestens 20% der Länge (L) des Fingerabdeckungsabschnitts (12) bedecken
**dadurch gekennzeichnet, dass**
das erste Material (22) eine Dichte von mindestens 1,5 g / cm³ aufweist.

2. Handschuh zur Schwingungsisolierung nach Anspruch 1, wobei der Handschuh ein Drei-Finger-Handschuh ist, wobei die Greifseite drei Fingerabdeckungsabschnitte (912, 912', 912") umfasst, die voneinander getrennt sind, und
wobei einer, zwei oder drei der Fingerabdeckungsabschnitte jeweils ein erstes Material mit einer Dichte von mindestens 1,5 g / cm³ und ein Isolationsmaterial umfassen; und
wobei das Isolationsmaterial von der Außenfläche der Greifseite ausgesehen, vor dem ersten Material angeordnet ist; und
wobei das erste Material und das Isolationsmaterial mindestens 20 % der Länge der Fingerabdeckungsabschnitte der einen, zwei oder drei Finger abdecken.

3. Handschuh nach einem der vorhergehenden Ansprüche, wobei das erste Material und / oder das Isolationsmaterial eine Falte umfassen, um ein Biegen des Materials zu erleichtern.

4. Handschuh zur Schwingungsisolierung nach einem der vorhergehenden Ansprüche, wobei das erste Material und das Isolationsmaterial mindestens 50% oder mindestens 75% oder mindestens 90% der Breite der Greifseite des mindestens einen Fingers abdecken.

5. Handschuh nach einem der vorhergehenden Ansprüche, wobei das erste Material und / oder das Isolationsmaterial ferner mindestens 20% der Länge des Handflächenabdeckungsabschnitts bedeckt.

6. Handschuh zur Schwingungsisolierung nach einem der vorhergehenden Ansprüche, wobei die Form der größten Oberfläche des ersten Materials mit der Form der größten Oberfläche des Isolationsmaterials übereinstimmt.

7. Handschuh zur Schwingungsisolierung nach einem der vorhergehenden Ansprüche, wobei der Fingerabdeckungsabschnitt und / oder der Handflächenabdeckungsabschnitt ferner eine innere (426) und eine äußere Oberflächenschicht (424) umfassen, wobei das erste Material und / oder das Isolationsmaterial zwischen den inneren und äußeren Oberflächenschichten angeordnet sind.

8. Handschuh zur Schwingungsisolierung nach einem der vorhergehenden Ansprüche, wobei das Isolationsmaterial ein Gelmaterial oder einen Schaum oder ein Schaumgummimaterial oder ein Material umfasst, das gasgefüllte Hohlräume umfasst.

9. Handschuh zur Schwingungsisolierung nach einem der vorhergehenden Ansprüche, wobei das erste Material eine Verbindung auf Polymerbasis umfasst.

10. Handschuh zur Schwingungsisolierung nach einem der vorhergehenden Ansprüche, wobei das erste Material ein Verbundstoff ist, der Metallpartikel und / oder Metallperlen umfasst.

11. Handschuh zur Schwingungsisolierung nach einem der vorhergehenden Ansprüche, wobei das erste Material Vorsprünge (530) umfasst, wobei die Vorsprünge mindestens 1/10 oder mindestens 1/3 oder mindestens 1/2 oder mindestens 2/3 der Fläche des ersten Materials abdecken, und wobei die Vorsprünge eine Höhe von mindestens 0,25 bis 10 mm haben.

12. Handschuh zur Schwingungsisolierung nach Anspruch 11, wobei die Vorsprünge dem Isolationsmaterial zugewandt sind.

13. Handschuh zur Schwingungsisolierung (1) mit einer Greifseite (14) und einer Handrückseite, wobei jede Seite eine Innenfläche und eine Außenfläche umfasst;
wobei die Greifseite einen Handflächenabdeckungsabschnitt (10) und mindestens einen Fingerabdeckungsabschnitt (12) umfasst; und
wobei der Fingerabdeckungsabschnitt (12) ein erstes Material (22) mit und ein Isolationsmaterial (20) umfasst; und
wobei das Isolationsmaterial (20) von der Außenfläche der Greiferseite (14) aus gesehen vor dem ersten Material (22) angeordnet ist; und
wobei das erste Material (22) und das Isolationsmaterial (20) mindestens 20% der Länge (L) des Fingerabdeckungsabschnitts (12) bedecken
**dadurch gekennzeichnet, dass**
das erste Material (22) eine Dichte von mindestens 1,5 g / cm³ aufweist, und dadurch, dass das Gewicht des ersten Materials (22) mindestens 5g ist.

## Revendications

1. Gant pour l'isolation contre des vibrations (1) comprenant un côté de préhension (14) et un côté arrière, chaque côté comprend une surface intérieure et une surface extérieure ;
dans lequel ledit côté de préhension comprend une partie de recouvrement de paume (10) et au moins une partie de recouvrement de doigt (12) ; et
dans lequel ladite partie de recouvrement de doigt (12) comprend un premier matériau (22) et un matériau isolant (20) ; et
dans lequel ledit matériau isolant (20) est agencé devant ledit premier matériau (22) vu depuis la surface extérieure dudit côté de préhension (14) ; et
dans lequel ledit premier matériau (22) et ledit matériau isolant (20) recouvrent au moins 20 % de la longueur (L) de ladite partie de recouvrement de doigt (12)
**caractérisé en ce que**
le premier matériau (22) a une densité d'au moins 1,5 g/cm³.

2. Gant pour l'isolation contre des vibrations selon la revendication 1, dans lequel ledit gant est un gant à trois doigts, dans lequel ledit côté de préhension comprend trois parties de recouvrement de doigt (912, 912', 912") qui sont séparées les unes des autres, et
dans lequel une, deux ou trois des parties de recouvrement de doigt comprennent chacune un premier matériau ayant une densité d'au moins 1,5 g/cm³ et un matériau isolant ; et
dans lequel ledit matériau isolant est agencé devant ledit premier matériau vu depuis la surface extérieure dudit côté de préhension ; et
dans lequel ledit premier matériau et ledit matériau isolant recouvrent au moins 20 % de la longueur desdites une, deux ou trois parties de recouvrement de doigt.

3. Gant selon l'une quelconque des revendications précédentes, dans lequel ledit premier matériau et/ou ledit matériau isolant comprend un pli pour faciliter un pliage du matériau.

4. Gant pour l'isolation contre des vibrations selon l'une quelconque des revendications précédentes, dans lequel le premier matériau et ledit matériau isolant couvrent au moins 50 %, ou au moins 75 %, ou au moins 90 % de la largeur du côté de préhension de ladite au moins une partie de recouvrement de doigt.

5. Gant selon l'une quelconque des revendications précédentes, dans lequel ledit premier matériau et/ou ledit matériau isolant couvre en outre au moins 20 % de la longueur de ladite partie de recouvrement de paume.

6. Gant pour l'isolation contre des vibrations selon l'une quelconque des revendications précédentes, dans lequel la forme de la plus grande surface dudit premier matériau correspond à la forme de la plus grande surface du matériau isolant.

7. Gant pour l'isolation contre des vibrations selon l'une quelconque des revendications précédentes, dans lequel ladite partie de recouvrement de doigt et/ou ladite partie de recouvrement de paume comprennent en outre une couche de surface interne (426) et une couche de surface externe (424), dans lequel ledit premier matériau et/ou ledit matériau d'isolation sont disposés entre lesdites couches de surface intérieure et extérieure.

8. Gant pour l'isolation contre des vibrations selon l'une quelconque des revendications précédentes, dans lequel le matériau isolant comprend un matériau en gel, ou une mousse, ou un matériau en caoutchouc mousse, ou un matériau comprenant des cavités remplies de gaz.

9. Gant pour l'isolation contre des vibrations selon l'une quelconque des revendications précédentes, dans lequel ledit premier matériau comprend un composé à base de polymère.

10. Gant pour l'isolation contre des vibrations selon l'une quelconque des revendications précédentes, dans lequel ledit premier matériau est un composite comprenant des particules métalliques et/ou des billes métalliques.

11. Gant pour l'isolation contre des vibrations selon l'une quelconque des revendications précédentes, dans lequel ledit premier matériau comprend des saillies (530), dans lequel lesdites saillies couvrent au moins 1/10, ou au moins 1/3, ou au moins 1/2, ou au moins 2/3 de la surface du premier matériau, et dans lequel lesdites saillies ont une hauteur d'au moins 0,25 à 10 mm.

12. Gant pour l'isolation contre des vibrations selon la revendication 11, dans lequel lesdites saillies font face audit matériau isolant.

13. Gant pour l'isolation contre des vibrations (1) comprenant un côté de préhension (14) et un côté arrière, chaque côté comprend une surface intérieure et une surface extérieure ;
dans lequel ledit côté de préhension comprend une partie de recouvrement de paume (10) et au moins une partie de recouvrement de doigt (12) ; et
dans lequel ladite partie de recouvrement de doigt (12) comprend un premier matériau (22) et un matériau isolant (20) ; et
dans lequel ledit matériau isolant (20) est agencé devant ledit premier matériau (22) vu depuis la surface extérieure dudit côté de préhension (14) ;
**caractérisé en ce que**
le premier matériau (22) a une densité d'au moins 1,5 g/cm³, et **en ce que** le poids dudit premier matériau (22) est d'au moins 5 g.
